# EUROPÄISCHE PATENTSCHRIFT

(11) **EP 0 621 837 B1**
(45) Veröffentlichungstag und Bekanntmachung des Hinweises auf die Patenterteilung: **17.04.1996**
(21) Anmeldenummer: 93902115.0
(22) Anmeldetag: 17.12.1992
(51) Int. Cl.: B60T 8/48

(54) **BREMSDRUCKSTEUERVORRICHTUNG INSBESONDERE ZUM STEUERN DES ANTRIEBSSCHLUPFES VON ANGETRIEBENEN RÄDERN**
BRAKING PRESSURE CONTROL DEVICE, IN PARTICULAR FOR CONTROLLING THE DRIVE SLIP OF DRIVEN WHEELS
DISPOSITIF DE REGULATION DE LA PRESSION DES FREINS, UTILE NOTAMMENT POUR REGULER LE PATINAGE A L'ACCELERATION DES ROUES MOTRICES

(30) Priorität: 23.01.1992 DE 4201732
(43) Veröffentlichungstag der Anmeldung: 02.11.1994
(73) Patentinhaber: ITT Automotive Europe GmbH, D-60488 Frankfurt am Main (DE)
(72) Erfinder: REINARTZ, Hans-Dieter, D-6000 Frankfurt am Main 50 (DE); BECK, Erhard, D-6290 Weilburg (DE)
(86) Internationale Anmeldenummer: EP9202938
(87) Internationale Veröffentlichungsnummer: WO9314961

(56) Entgegenhaltungen:
- DE-A- 3 831 426
- DE-A- 4 000 837
- GB-A- 2 195 724
- GB-A- 2 218 479
- GB-A- 2 238 836
- GB-A- 2 241 031

## Beschreibung

Die Erfindung bezieht sich auf eine Bremsdrucksteuervorrichtung zum Steuern des Antriebsschlupfes von angetriebenen Rädern gemäß dem Oberbegriff des Anspruchs 1.

Eine derartige Vorrichtung ist aus der DE-OS 38 31 426 bekannt.

Dargestellt ist eine blockiergeschützte hydraulische Bremsanlage nach dem Rückförderprinzip. Um diese Anlage auch zur Antriebsschlupfregelung nutzen zu können, wird vorgeschlagen, in die Bremsleitung ein Trennventil, mit dessen Hilfe der Hauptzylinder vom Bremskreis getrennt werden kann, und eine sperrbare Verbindung zwischen der Saugseite der Pumpe und dem Vorratsbehälter vorzusehen.

Das Drehverhalten der angetriebenen Räder wird mittels Sensoren überwacht. Stellt sich heraus, daß ein angetriebenes Rad durchzudrehen droht, so schaltet die Anlage in den Antriebsschlupfregelmodus. Dazu wird der Hauptzylinder vom Bremskreis getrennt und die Verbindungsleitung geöffnet. Die Pumpe saugt Druckmittel aus dem Vorratsbehälter an und fördert es in die Radbremse. Der aufgebaute Bremsdruck erzeugt ein Bremsmoment, das dem Antriebsmoment entgegenwirkt, wodurch eine Verzögerung des durchdrehenden Rades erzielt wird.

Der Radbremsdruck kann nun mit Modulationsventilen (Einlaßventil, Auslaßventil) so eingestellt werden, daß der Antriebsschlupf eine Größe aufweist, bei der in optimaler Weise Antriebskräfte übertragen werden können.

Bei der beschriebenen Bremsanlage tritt aber das folgende Problem auf. Es ist durchaus möglich, daß der Fahrer während einer Antriebsschlupfregelung die Bremse betätigt. Dabei wird Druckmittel aus dem Hauptzylinder über ein parallel zum Trennventil geschaltetes Rückschlagventil zur Radbremse verdrängt. Mit Betätigen des Bremspedals und Lösen des Gaspedals wird das Antriebsmoment reduziert, so daß keine Antriebsschlupfregelung mehr notwendig ist. Es ist weiterhin denkbar, daß während des Bremsvorganges eine Bremsschlupfregelung notwendig wird, da das gebremste Rad zu blockieren droht. Gemäß dem Rückförderprinzip fördert die Pumpe das aus der Radbremse abgelassene Druckmittel zurück in den Hauptzylinder. In dem Bremskreis befindet sich aber nicht nur Druckmittel aus dem Hauptzylinder, sondern auch Druckmittel, das zuvor während der Antriebsschlupfregelung aus dem Vorratsbehälter von der Pumpe in den Bremskreis gefördert worden ist. Auch diese Druckmittelmenge wird nun in den Hauptzylinder zurückgefördert, so daß der Kolben in seine Grundstellung zurückgedrängt wird. Dabei öffnet sich eine Verbindung zum Vorratsbehälter, so daß das Druckmittel über diese Verbindung in den Vorratsbehälter abfließen kann. Bei einem Hauptzylinder, der ein Manschetten/Schnüffellochbohrung-Ventil aufweist, kommt es bei diesem Vorgang zur Beschädigung der Manschette, da diese mit hohem Druck über die Schnüffellochbohrung verschoben wird.

Die Erfindung schlägt daher gemäß dem kennzeichnenden Teil des Anspruchs 1 vor, an die Druckseite der Pumpe über ein Sperrventil einen Niederdruckspeicher anzuschließen. Dieses Ventil ist während einer Antriebsschlupfregelung geschlossen.

Das Ventil kann elektromagnetisch betätigt werden oder aber hydraulisch, wobei als Steuerdruck der Hauptzylinderdruck genutzt werden kann.

Weiterhin ist es denkbar, daß das Sperrventil mit dem Ventil in der Verbindungsleitung baulich vereint wird.

Im folgenden soll anhand von drei Figuren der Erfindungsgedanke näher erläutert werden.
- Figur 1: Hydraulikschaltplan einer Bremsanlage
- Figur 2: Ausschnitt aus dem Hydraulikschaltplan gemäß der Figur 1 mit einer hydraulischen Ansteuerung des Sperrventils
- Figur 3: Variation zu Figur 2
Zunächst sei auf die Figur 1 Bezug genommen, wobei zunächst die Elemente dargestellt werden, die für eine Normalbremsung und für eine Bremsschlupfregelung von Bedeutung sind.

Die Bremsanlage besteht aus einem Hauptbremszylinder 1, an dem eine Radbremse 2 über eine Bremsleitung 3 angeschlossen ist. In die Bremsleitung 3 eingefügt ist ein Einlaßventil 4, das in seiner Grundstellung die Bremsleitung offen hält und in seiner Schaltstellung die Bremsleitung sperrt. Parallel zum Einlaßventil ist ein Rückschlagventil 5 geschaltet, das zum Hauptzylinder hin öffnet. Das Rückschlagventil ermöglicht eine sofortige Druckabsenkung in den Radbremsen, wenn die Betätigungskraft auf den Hauptbremszylinder 1 gesenkt wird.

Die Radbremse 2 steht über eine weitere Leitung, der Rücklaufleitung 6, mit dem Hauptbremszylinder in Verbindung. In die Leitung eingefügt ist eine Pumpe 8 mit einem Saugventil 9 und einem Druckventil 10. Zwischen der Radbremse 2 und der Pumpe 8 ist ein Auslaßventil 7 eingefügt, das in seiner Grundstellung die Rücklaufleitung 6 sperrt und in seiner Schaltstellung die Rücklaufleitung 6 freigibt. An der Saugseite der Pumpe, also zwischen dem Saugventil 9 und dem Auslaßventil 7, schließt ein Niederdruckspeicher (im folgenden Rücklaufspeicher 11 genannt) an. Er hat die Aufgabe, Druckmittel, das nicht unmittelbar von der Pumpe 8 weitergefördert wird, kurzzeitig aufzunehmen.

Der Hauptbremszylinder 1 weist einen Kolben 12 auf, der mit einem (symbolisch dargestellten) Pedal verbunden ist. An dem Kolben 12 ist eine Manschette 13 befestigt, die in der gezeigten Grundstellung des Kolbens unmittelbar vor einer Auslaßbohrung 14 liegt, die mit einem Reservoir 38 verbunden ist. In der Grundstellung des Kolbens 12 besteht daher eine Verbindung zwischen dem Reservoir 38 und dem Bremskreis. Wird der Kolben 12 unter Wirkung der Pedalkraft (gemäß der Darstellung nach links) verschoben, so überfährt die Manschette 13 die Auslaßbohrung 14, so daß der Bremskreis vom Reservoir getrennt ist und im Bremskreis ein Druck aufgebaut werden kann. Der Weg zwischen der Grundposition des Kolbens 12 und der Position, in der die Manschette die Auslaßbohrung 14 vollständig überfahren hat, wird mit s bezeichnet.

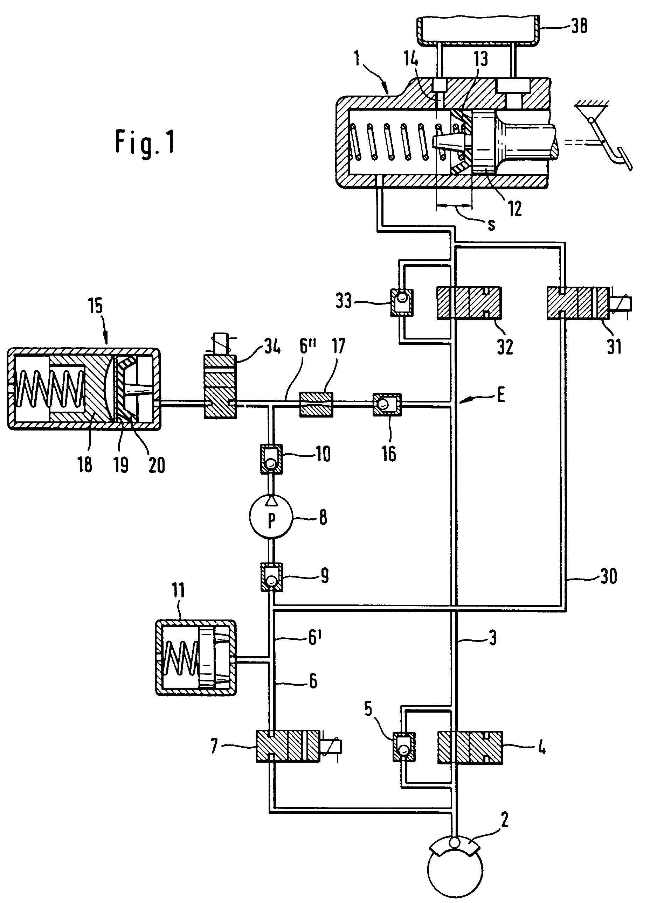

Die bisher beschriebene Bremsanlage wird nun mit einem weiteren Niederdruckspeicher (im folgenden Übergangspeicher 15 genannt) versehen. Dieser schließt gemäß der Figur 1 an den Druckbereich 6'' (zwischen Pumpe und Hauptbremszylinder) der Rücklaufleitung 6 an. Er besteht aus einem Kolben 18 und einer Manschette 20, die den Speicherraum gegenüber der Atmosphäre trennt. Die Manschette 20 ist an einer Blattfeder 19 zwischen dem Kolben 18 und der Manschette abgestützt. Die Blattfeder 19 kann sich in eine Wölbung am Boden des Kolbens anlegen. Mit dieser Maßnahme sollen Geräuschemissionen unterbunden werden. Der Kolben 18 steht unter der Wirkung einer nur leicht vorgespannten Feder. Im Druckbereich 6'' der Rücklaufleitung 6 befindet sich im Bereich zwischen dem Übergangspeicher 15 und der Einmündung der Rücklaufleitung 6 in die Bremsleitung 3 eine Drossel 17 und ein Rückschlagventil 16. Die beiden Elemente sind hintereinander geschaltet. Das Rückschlagventil 16 verhindert, daß bei einer Bremsung, die nicht geregelt ist, Druckmittel in den Übergangspeicher 15 gelangt.

Die Bremsanlage arbeitet nach dem folgenden Schema.

Durch Betätigung des Pedals kann ein Druck in der Radbremse 2 aufgebaut werden. Sensoren überwachen das Drehverhalten des Rades, so daß eine Blockiergefahr ermittelt werden kann. Tritt diese auf, so schaltet die Anlage in den ABS-Modus. Während des ABS-Modus läuft die Pumpe. Zum Senken des Drucks in der Radbremse wird nun das Einlaßventil 4 geschlossen, und das Auslaßventil 7 geöffnet. Dadurch gelangt Druckmittel aus der Radbremse in den Rücklaufspeicher 11 und wird von dort mittels der Pumpe zunächst in den Übergangspeicher 15 gefördert. Solange der Speicher 15 noch nicht vollständig gefüllt ist, herrscht vor dem Rückschlagventil 16 nur ein kleiner Druck, da die Feder des Übergangspeichers 15 nur eine leichte Vorspannung aufweist. Sobald der Übergangspeicher 15 vollständig gefüllt ist, legt sich der Kolben 18 an einen rückwärtigen Anschlag an, so daß nun der Druck vor dem Rückschlagventil 16 ansteigen kann. Sobald der Druck des Hauptbremszylinders erreicht ist, strömt Druckmittel über das Rückschlagventil 16 zum Hauptbremszylinder. Der Speicher 15 kann dabei nicht entleert werden, da dies zur Folge hätte, daß der Druck vor dem Rückschlagventil 16 sinkt und damit nicht in der Lage ist das Rückschlagventil 16 gegen den Hauptzylinderdruck zu öffnen. Solange also eine Regelung abläuft und ein Druck im Hauptbremszylinder ansteht, bleibt der Übergangspeicher 15 gefüllt. Erst wenn das Pedal freigegeben wird und der Druck im Hauptbremszylinder sinkt, ist die Feder des Übergangspeichers 15 in der Lage, den Kolben 18 zu verschieben und das Druckmittel im Übergangspeicher 15 in den Hauptbremszylinder 1 zu verbringen. Dabei überfährt die Manschette die Auslaßbohrung 14 drucklos, so daß keine Beschädigung auftreten kann.

Um eine Antriebsschlupfregelung mit der beschriebenen Bremsanlage realisieren zu können, sind zusätzliche Elemente notwendig. Zunächst ist eine Verbindungsleitung 30 zwischen dem Hauptbremszylinder 1 und der Saugseite der Pumpe 8 vorzusehen, in der ein 2/2-Wegeventil 31 eingefügt ist. Dieses Ventil soll im weiteren ASR-Ventil genannt werden.

Weiterhin ist in der Bremsleitung 3 ein Trennventil 32 vorgesehen und zwar zwischen Hauptzylinder 1 und dem Einmündungspunkt E der Druckleitung 6'' in die Bremsleitung 3.

Der Speicher 15 wird über ein Sperrventil 34 an die Druckleitung 6'' angeschlossen. Vorgesehen ist auch ein Rückschlagventil 33 parallel zum Trennventil 32. Im Falle einer Antriebsschlupfregelung wird das Trennventil 32 geschlossen und das ASR-Ventil 31 geöffnet. Die Pumpe kann nun Druckmittel aus dem Vorratsbehälter 38 über die Bohrung 14 und das offene ASR-Ventil 31 ansaugen und in die Bremsleitung 3 unterhalb des Trennventils 32 fördern. Dabei wird ein Radbremsdruck aufgebaut, der mit Hilfe des Einlaßventils 4 und des Auslaßventils 7 moduliert werden kann, und so eingestellt, daß das auf das Rad wirkende Antriebsmoment soweit kompensiert wird, daß das verbleibende Drehmoment durch die Reibkräfte zwischen Reifen und Fahrbahn auf die Fahrbahn übertragen werden kann, ohne daß die Räder durchdrehen.

Das Sperrventil 34 ist während einer Antriebsschlupfregelung geschlossen.

Es wird nur dann geöffnet, wenn während einer Antriebsschlupfregelung das Pedal betätigt wird, z. B. mit einem nicht dargestellten Pedalwegsensor festgestellt werden kann.

Das während einer Antriebsschlupfregelung in den Bremskreis verbrachte Druckmittel wird dann von der Pumpe 8 nicht in den Hauptzylinder, sondern in den Speicher 15 gefördert, so daß auf diese Weise eine Beschädigung der Manschette 13 vermieden wird.

Dazu muß das Aufnahmevolumen des Speichers 15 vergrößert werden. Der Speicher muß nun nicht mehr nur die Druckmittelmenge entsprechend dem Kolbenweg s aufnehmen, sondern im Prinzip die Druckmittelmenge, die der Bremskreis aufnehmen kann.

Damit während einer Bremsschlupfregelung, die nicht unmittelbar einer Antriebsschlupfregelung folgt, die Volumenentnahme des Speichers 15 nicht zu groß wird, kann dieser mit einem Schalter versehen werden, so daß das Sperrventil während einer Bremsschlupfregelung gesperrt werden kann, sobald der Speicher 15 ein Volumen entsprechend dem Verschiebeweg s des Kolbens 12 aufgenommen hat.

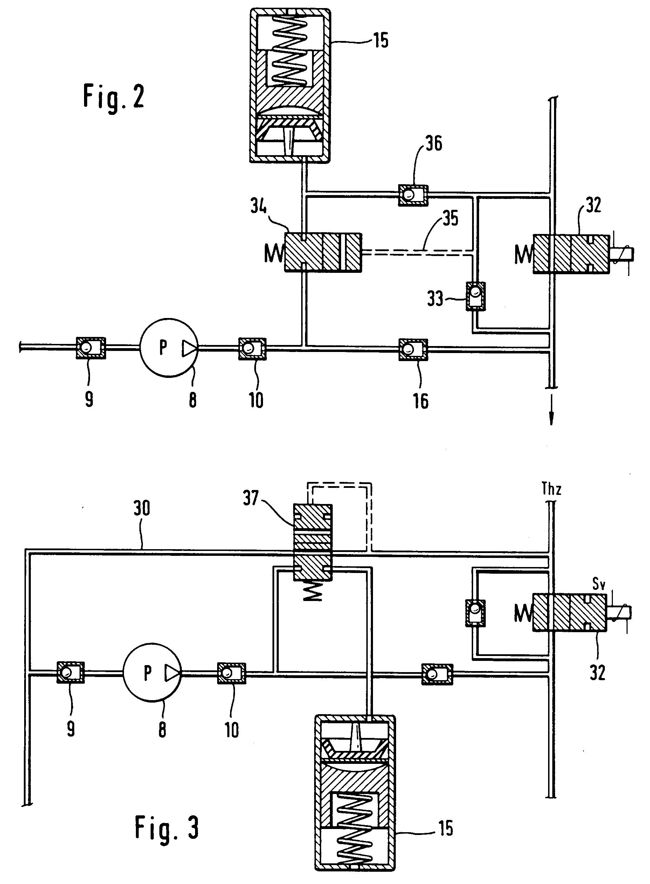

Die Figur 2 zeigt eine hydraulische Ansteuerung des Sperrventils 34. Die Ansteuerung erfolgt über eine Steuerleitung 35, die an den Hauptzylinder anschließt. Weiterhin ist ein Rückschlagventil 36 vorgesehen, das zum Speicher 15 hin schließt. Dieses Rückschlagventil befindet sich in einer Leitung, die entweder an den Hauptzylinder anschließt oder aber an den Bereich der Druckleitung 6'' zwischen dem Druckventil 10 und dem Rückschlagventil 16. Das Rückschlagventil 36 stellt sicher, daß der Speicher 15, bei druckloser Bremsanlage geleert wird.

In der Figur 3 ist eine Kombination des Sperrventils 34 und des ASR-Ventils 31 dargestellt. Es ist als 4/2-Wegeventil 37 ausgebildet, wobei in der Grundstellung die Leitung zum Speicher 15 gesperrt ist und die Verbindungsleitung 30 geöffnet ist. Sobald im Hauptzylinder ein Druck aufgebaut wird, erfolgt eine Umschaltung des Kombinationsventils 37, so daß die Leitung zum Speicher 15 geöffnet wird und die Verbindungsleitung 30 gesperrt wird.

## Patentansprüche

1. Bremsdrucksteuereinheit, zur Antriebsschlupfregelung, bestehend aus einem Hauptzylinder (1) mindestens einer Radbremse (2), die zu einem angetriebenen Rad gehört und über eine Bremsleitung (3) mit dem Hauptzylinder (1) verbunden ist, einer Pumpe (8), die über eine Druckleitung (6''), welche in einem Einmündungspunkt (E) an die Bremsleitung (3) anschließt, in die Bremsleitung (3) fördert, einem Trennventil (32) zwischen dem Einmündungspunkt (E) und dem Hauptzylinder (1), eine Verbindungsleitung (30) zwischen dem Vorratsbehälter (34) und der Saugseite der Pumpe (8) in der ein ASR-Ventil (31) eingefügt ist, Modulationsventile (4,7) zum Modelieren des Drucks in der Radbremse (2), dadurch **gekennzeichnet**, daß an der Druckseite der Pumpe ein Niederdruckspeicher (15) vorgesehen ist, der über ein Sperrventil (34) an die Druckseite der Pumpe (8) anschließt, wobei das Sperrventil (34) während einer Antriebsschlupfregelung geschlossen ist.

2. Steuereinheit nach Anspruch 1, dadurch **gekennzeichnet**, daß das Sperrventil (34) vom Hauptzylinderdruck von der geschlossenen in die offene Position schaltbar ist.

3. Steuereinheit nach Anspruch 1 oder 2, dadurch **gekennzeichnet**, daß Sperrventil (34) und ASR-Ventil (31) zu einem 2/4-Kombinationsventil (37), baulich vereint sind.

## Claims

1. A brake pressure control unit for traction slip control, comprising: a master cylinder (1), at least one wheel brake (2) which is associated with a driven wheel and is connected to the master cylinder (1) through a brake piping (3), a pump (8) which delivers fluid to the brake piping (3) through a pressure line (6'') terminating at inlet point (E) into the brake piping (3), a separating valve (32) between the inlet point (E) and the master cylinder (1), a connecting line (30) between the reservoir (34) and the suction side of the pump (8) in which a traction slip control valve (31) is inserted, modulating valves (4, 7) for the modulation of the pressure in the wheel brake (2), **characterized** in that, at the discharge side of the pump, a low-pressure accumulator (15) is provided and connected through a lock valve (34) to the discharge side of the pump (8), the lock valve (34) being in the closed condition during a traction slip control action.

2. A control unit as claimed in claim 1, **characterized** in that the lock valve (34) is switchable from the closed position into the open position by the pressure of the master cylinder.

3. A control unit as claimed in claim 1 or in claim 2, **characterized** in that the lock valve (34) and the traction slip control valve (31) are constructionally united to form one 2/4-way combination valve (37).

## Revendications

1. Unité de commande de pression de freinage, pour la régulation du glissement de traction, constituée d'un maître-cylindre (1), d'au moins un frein de roue (2), qui appartient à une roue motrice et est relié au maître-cylindre (1) par l'intermédiaire d'une conduite de frein (3), d'une pompe (8), qui refoule dans la conduite de frein (3) par l'intermédiaire d'une conduite de refoulement (6'') qui est raccordée à la conduite de frein (3) en un point de débouché (E), d'une valve d'isolement (32), disposée entre le point de débouché (E) et le maître-cylindre (1), d'une conduite de liaison (30), qui est disposée entre le réservoir de stockage (38) et le côté d'aspiration de la pompe (8) et dans laquelle une valve ASR (régulation du glissement de traction) (31) est insérée, et de valves de modulation (47) servant à moduler la pression dans le frein de roue (2), caractérisée en ce qu'il est prévu, sur le côté de refoulement de la pompe, un accumulateur à basse pression (15) qui est raccordé au côté de refoulement de la pompe (8) par l'intermédiaire d'une valve de blocage (34), cette valve de blocage (34) étant fermée pendant une régulation du glissement de traction.

2. Unité de commande selon la revendication 1, caractérisée en ce que la valve de blocage (34) est agencée de façon à pouvoir être commutée de la position fermée à la position ouverte par la pression du maître-cylindre.

3. Unité de commande selon la revendication 1 ou 2, caractérisée en ce que la valve de blocage (34) et la valve ASR (31) sont réunies structurellement en formant une valve de combinaison à 4 voies/2 positions (37).
